# EUROPEAN PATENT APPLICATION

(11) **EP 4 665 044 A1**
(43) Date of publication of application: **17.12.2025**
(21) Application number: 23920543.8
(22) Date of filing: 10.02.2023
(51) Int. Cl.: H04W 72/0453

(54) **RESOURCE CONFIGURATION METHOD AND APPARATUS, AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN)
(74) Representative: Stöckeler, Ferdinand
(86) International application number: PCT/CN2023/075524
(87) International publication number: WO 2024/164335

(57) **Abstract**

The present disclosure relates to a resource configuration method and apparatus, and a storage medium, relating to the technical field of communications and used to provide resource configuration flexibility. The method comprises: determining a resource configuration requirement, the resource configuration requirement indicating a requirement that a frequency domain resource comprised by the first control resource set configured for a terminal shall meet; configuring the first control resource set on the basis of the resource configuration requirement.

## Description

### TECHNICAL FIELD

The present disclosure relates to the field of communication technology, and specifically to a method and an apparatus for resource configuration, and a storage medium.

### BACKGROUND

In a new radio (NR) system, when a terminal needs physical downlink control channel (PDCCH) transmission, the PDCCH is transmitted via a control resource set (CORESET). The terminal needs to obtain resource configuration information of the CORESET from a network device. The network device configures 1 to 3 orthogonal frequency division multiplexing (OFDM) symbols in a time domain and a plurality of physical resource blocks (PRBs) in a frequency domain for the CORESET. The CORESET may be shared by a plurality of PDCCHs, and the plurality of PDCCHs to be transmitted will be mapped into the CORESET according to a preset rule.

Currently, it is considered to enable the terminal to support NR technology using a frequency band with a smaller system bandwidth. However, due to its smaller system bandwidth, there are fewer available transmission resources for the PDCCH correspondingly, resulting in a poor coverage of the PDCCH.

### SUMMARY

To overcome problems existing in the related art, the present disclosure provides a method and an apparatus for resource configuration, and a storage medium.

According to a first aspect of the embodiments of the present disclosure, a method for resource configuration is provided, performed by a network device, including: determining a resource configuration requirement, in which the resource configuration requirement indicates a requirement that needs to be satisfied by a frequency domain resource included in a first control resource set (CORESET) configured for a terminal; and configuring the first CORESET based on the resource configuration requirement.

In an implementation, configuring the first CORESET based on the resource configuration requirement includes: in response to determining that a first condition is satisfied, configuring the frequency domain resource in the first CORESET so that the first CORESET satisfies a first resource configuration requirement, in which the first condition includes at least one of: a frequency band for transmitting a physical downlink control channel (PDCCH) being located in a first set; a system bandwidth of a frequency band for transmitting a PDCCH being greater than a first threshold; or a protocol release of the terminal corresponding to Release 15, Release 16, or Release 17.

In an implementation, configuring the first CORESET based on the resource configuration requirement includes: in response to determining that a second condition is satisfied, configuring the first CORESET so that the frequency domain resource in the first CORESET does not satisfy a first resource configuration requirement, in which the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the frequency domain resource in the first CORESET includes a number of physical resource blocks (PRBs) occupied by the first CORESET.

In an implementation, a first resource configuration requirement indicates that the number of PRBs configured for the first CORESET is an integer multiple of N, where N is a positive integer.

In an implementation, the method further includes: in response to determining that the second condition is satisfied, configuring the first CORESET so that the frequency domain resource in the first CORESET satisfies a second resource configuration requirement.

In an implementation, the second resource configuration requirement indicates the frequency domain resource configured for the first CORESET so that the first CORESET includes an integer multiple of control channel elements (CCEs).

In an implementation, the method further includes: in response to an actual frequency domain resource configured for the first CORESET not satisfying the first resource configuration requirement, configuring a virtual frequency domain resource for the first CORESET; and determining a second CORESET, in which a frequency domain resource in the second CORESET includes the actual frequency domain resource and the virtual frequency domain resource in the first CORESET, and the frequency domain resource in the second CORESET satisfies the first resource configuration requirement.

In an implementation, the method further includes: constructing a resource element group (REG) bundle and/or a CCE based on the frequency domain resource in the second CORESET, in which one CCE includes at least one REG bundle.

In an implementation, the method further includes: in response to a transmission mode for transmitting the PDCCH based on the first CORESET being configured as interleaved transmission, performing the interleaved transmission of the PDCCH based on the second CORESET.

In an implementation, the method further includes: in response to a CCE corresponding to a PDCCH candidate transmitted based on the second CORESET including the virtual frequency domain resource, performing rate matching based on the actual frequency domain resource.

In an implementation, the method further includes: in response to a CCE corresponding to a PDCCH candidate transmitted based on the second CORESET including the virtual frequency domain resource, performing rate matching based on an aggregation level corresponding to the PDCCH candidate.

In an implementation, the method further includes: when performing resource mapping between the PDCCH and a frequency domain resource, in response to a mapping object of the PDCCH being the virtual frequency domain resource, discarding a transmission symbol corresponding to the virtual frequency domain resource.

According to a second aspect of the embodiments of the present disclosure, a method for resource configuration is provided, performed by a terminal, including: determining a first CORESET configured for the terminal by a network device, in which the first CORESET is determined based on a resource configuration requirement, and the resource configuration requirement indicates a requirement that needs to be satisfied by a frequency domain resource included in the first CORESET.

In an implementation, it is determined that a first condition is satisfied, and the frequency domain resource in the first CORESET satisfies a first resource configuration requirement, in which the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, it is determined that a second condition is satisfied, and the frequency domain resource in the first CORESET does not satisfy a first resource configuration requirement, in which the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the frequency domain resource in the first CORESET includes a number of physical resource blocks (PRBs) occupied by the first CORESET.

In an implementation, a first resource configuration requirement indicates that the number of PRBs configured for the first CORESET is an integer multiple of N, where N is a positive integer.

In an implementation, it is determined that the second condition is satisfied, and the frequency domain resource in the first CORESET satisfies a second resource configuration requirement.

In an implementation, the second resource configuration requirement indicates the frequency domain resource configured for the first CORESET so that the first CORESET includes an integer multiple of CCEs.

In an implementation, the method also includes: if an actual frequency domain resource of the first CORESET does not satisfy the first resource configuration requirement, determining a second CORESET, in which a frequency domain resource of the second CORESET includes the actual frequency domain resource and a virtual frequency domain resource of the first CORESET, and the frequency domain resource in the second CORESET satisfies the first resource configuration requirement.

In an implementation, the method also includes: when receiving the PDCCH based on the second CORESET, determining a position of the virtual frequency domain resource in the second CORESET and padding a transmission symbol corresponding to the virtual frequency domain resource.

According to a third aspect of the embodiments of the present disclosure, an apparatus for resource configuration is provided, including: a determining module, configured to determine a resource configuration requirement, in which the resource configuration requirement indicates a requirement that needs to be satisfied by a frequency domain resource included in a first CORESET configured for a terminal; and a configuring module that configures the first CORESET based on the resource configuration requirement.

In an implementation, the configuring module configures, in response to determining that a first condition is satisfied, the first CORESET so that the frequency domain resource in the first CORESET satisfies a first resource configuration requirement, in which the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, the configuring module configures, in response to determining that a second condition is satisfied, the first CORESET so that the frequency domain resource in the first CORESET does not satisfy a first resource configuration requirement, in which the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the frequency domain resource in the first CORESET includes a number of PRBs occupied by the first CORESET.

In an implementation, a first resource configuration requirement indicates that the number of PRBs configured for the first CORESET is an integer multiple of N, where N is a positive integer.

In an implementation, the configuring module configures, in response to determining that the second condition is satisfied, the first CORESET so that the frequency domain resource in the first CORESET satisfies a second resource configuration requirement.

In an implementation, the second resource configuration requirement indicates the frequency domain resource configured for the first CORESET so that the first CORESET includes an integer multiple of CCEs.

In an implementation, the configuring module configures, in response to an actual frequency domain resource configured for the first CORESET not satisfying the first resource configuration requirement, a virtual frequency domain resource for the first CORESET; and the determining module is configured to determine a second CORESET, in which a frequency domain resource in the second CORESET includes the actual frequency domain resource and the virtual frequency domain resource in the first CORESET, and the frequency domain resource in the second CORESET satisfies the first resource configuration requirement.

In an implementation, a processing module is configured to construct an REG bundle and/or a CCE based on the frequency domain resource in the second CORESET, in which one CCE includes at least one REG bundle.

In an implementation, the processing module is configured to, in response to a transmission mode for transmitting the PDCCH based on the first CORESET being configured as interleaved transmission, perform the interleaved transmission of the PDCCH based on the second CORESET.

In an implementation, the processing module is configured to, in response to a CCE corresponding to a PDCCH candidate transmitted based on the second CORESET including the virtual frequency domain resource, perform rate matching based on the actual frequency domain resource.

In an implementation, the processing module is configured to, in response to a CCE corresponding to a PDCCH candidate transmitted based on the second CORESET including the virtual frequency domain resource, perform rate matching based on an aggregation level corresponding to the PDCCH candidate.

In an implementation, the processing module is configured to, when performing resource mapping between the PDCCH and a frequency domain resource, in response to a mapping object of the PDCCH being the virtual frequency domain resource, discard a transmission symbol corresponding to the virtual frequency domain resource.

According to a fourth aspect of the embodiments of the present disclosure, an apparatus for resource configuration is provided, including: a determining module, configured to determine a first CORESET configured for a terminal by a network device, in which the first CORESET is determined based on a resource configuration requirement, and the resource configuration requirement is used to determine a requirement that needs to be satisfied by a frequency domain resource included in the first CORESET.

In an implementation, it is determined that a first condition is satisfied, and the frequency domain resource in the first CORESET satisfies a first resource configuration requirement, in which the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, it is determined that a second condition is satisfied, and the frequency domain resource in the first CORESET does not satisfy a first resource configuration requirement, in which the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the frequency domain resource in the first CORESET includes a number of physical resource blocks (PRBs) occupied by the first CORESET.

In an implementation, a first resource configuration requirement indicates that the number of PRBs configured for the first CORESET is an integer multiple of N, where N is a positive integer.

In an implementation, it is determined that the second condition is satisfied, and the frequency domain resource in the first CORESET satisfies a second resource configuration requirement.

In an implementation, the second resource configuration requirement indicates the frequency domain resource configured for the first CORESET so that the first CORESET includes an integer multiple of CCEs.

In an implementation, the determining module is also configured to, if an actual frequency domain resource of the first CORESET does not satisfy the first resource configuration requirement, determine a second CORESET, in which a frequency domain resource of the second CORESET includes the actual frequency domain resource and a virtual frequency domain resource of the first CORESET, and the frequency domain resource in the second CORESET satisfies the first resource configuration requirement.

In an implementation, the receiving module is also configured to, when receiving the PDCCH based on the second CORESET, determine a position of the virtual frequency domain resource in the second CORESET and pad a transmission symbol corresponding to the virtual frequency domain resource.

According to a fifth aspect of the embodiments of the present disclosure, a device for resource configuration is provided, including: a processor; and a memory for storing instructions executable by the processor, in which the processor is configured to implement the method in the above first aspect or the method in any one of implementations of the above first aspect.

According to a sixth aspect of the embodiments of the present disclosure, a device for resource configuration is provided, including: a processor; and a memory for storing instructions executable by the processor, in which the processor is configured to implement the method in the above second aspect or the method in any one of implementations of the above second aspect.

According to a seventh aspect of the embodiments of the present disclosure, a storage medium for storing instructions is provided. When the instructions in the storage medium are executed by a processor of a network device, the network device is caused to implement the method in the above first aspect or the method in any one of implementations of the above first aspect.

According to an eighth aspect of the embodiments of the present disclosure, a storage medium for storing instructions is provided. When the instructions in the storage medium are executed by a processor of a terminal, the terminal is caused to implement the method in the above second aspect or the method in any one of implementations of the above second aspect.

The technical solutions according to the embodiments of the present disclosure provide following beneficial effects: the network device determines the resource configuration requirement and configures the first CORESET based on the resource configuration requirement. The resource configuration requirement indicates the requirement that needs to be satisfied by the frequency domain resource included in the first CORESET configured for the terminal. Thus, the network device may configure the frequency domain resource for the CORESET based on the resource configuration requirement corresponding to the CORESET, thus achieving more flexible configuration of the CORESET and improving resource utilization.

It may be understood that the above general description and the following detailed description are exemplary and explanatory only, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating a wireless communication system according to an exemplary embodiment.
FIG. 2 is a schematic diagram illustrating physical downlink control channel (PDCCH) mapping according to an exemplary embodiment.
FIG. 3 is a flowchart illustrating a method for resource configuration according to an exemplary embodiment.
FIG. 4 is a flowchart illustrating a method for resource configuration according to an exemplary embodiment.
FIG. 5 is a flowchart illustrating a method for resource configuration according to an exemplary embodiment.
FIG. 6 is a flowchart illustrating a method for resource configuration according to an exemplary embodiment.
FIG. 7 is a flowchart illustrating a method for resource configuration according to an exemplary embodiment.
FIG. 8 is a flowchart illustrating a method for rate matching according to an exemplary embodiment.
FIG. 9 is a flowchart illustrating a method for rate matching according to an exemplary embodiment.
FIG. 10 is a flowchart illustrating a method for resource mapping according to an exemplary embodiment.
FIG. 11 is a flowchart illustrating a method for resource configuration according to an exemplary embodiment.
FIG. 12 is a flowchart illustrating a method for resource configuration according to an exemplary embodiment.
FIG. 13 is a flowchart illustrating a method for resource configuration according to an exemplary embodiment.
FIG. 14 is a block diagram illustrating an apparatus for resource configuration according to an exemplary embodiment.
FIG. 15 is a block diagram illustrating an apparatus for resource configuration according to an exemplary embodiment.
FIG. 16 is a block diagram illustrating a device for resource configuration according to an exemplary embodiment.
FIG. 17 is a block diagram illustrating a device for resource configuration according to an exemplary embodiment.

### DETAILED DESCRIPTION

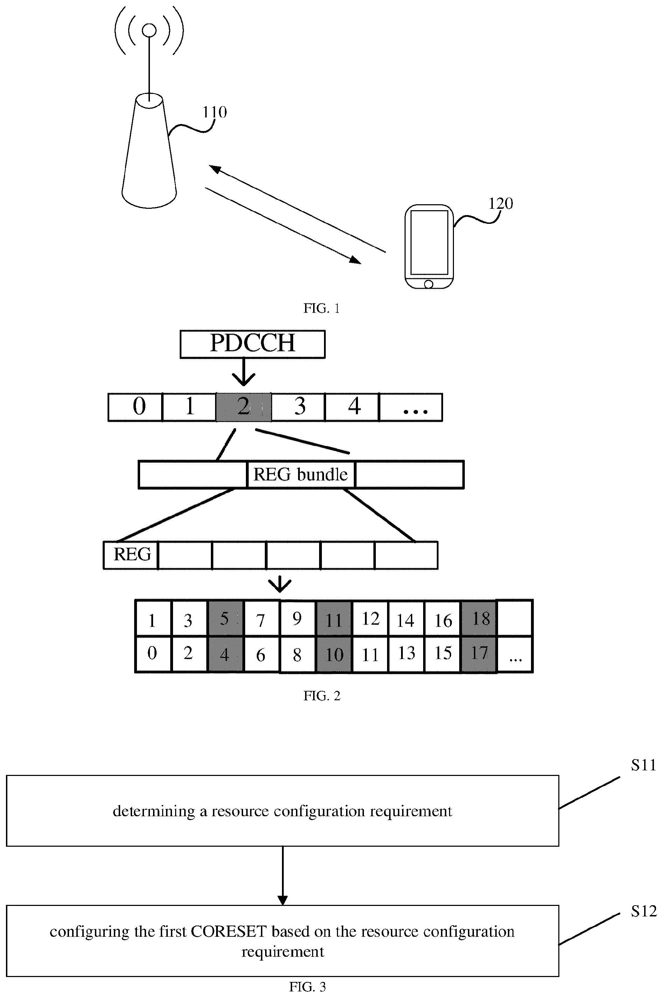

Reference will now be made in detail to exemplary embodiments, examples of which are illustrated in the accompanying drawings. The following description refers to the accompanying drawings in which same numbers in different accompanying drawings represent same or similar elements unless otherwise represented. The implementations set forth in the following description of exemplary embodiments do not represent all implementations consistent with the disclosure.
the method for resource configuration according to the embodiments of the disclosure may be applied to a wireless communication system shown in FIG. 1. As shown in FIG. 1, the wireless communication system includes a network device 110 and a terminal 120. It may be understood that the wireless communication system shown in FIG. 1 is only schematic. The wireless communication system may also include other network devices, such as a core network device, a wireless relay device, and a wireless backhaul device, which are not shown in FIG. 1. The embodiments of the present disclosure do not limit a number of network devices or a number of terminals included in the wireless communication system.

Furthermore, it may be understood that the wireless communication system in the embodiments of the present disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), or carrier sense multiple access/collision avoidance. Depending on a factor such as capacities, velocities, latencies of different networks, the networks may be categorized into a 2G (generation) network, a 3G network, a 4G network, or a future evolved network, such as a 5th generation wireless communication system (5G) network. The 5G network may also be referred to as a new radio (NR) network. For convenience, the wireless communication network may sometimes be simply referred to as a network.

Further, the network device 110 in the disclosure may also be called a radio access network (RAN) device. The RAN device may include: a base station, an evolved Node B (eNB), a home base station, an access point (AP) in a wireless fidelity (Wi-Fi) system, a wireless relay node, a wireless backhaul node, a transmission point (TP), or a transmission and reception point (TRP). It may also be a next generation node B (gNB) in an NR system or a component or a part of a base station. When it is a V2X communication system, the network device may also be a vehicle-mounted device. It may be understood that the embodiments of the present disclosure do not limit a specific technology or a specific device form adopted by the network device.

Furthermore, the terminal 120 mentioned in the present disclosure may also be called a user equipment (UE), a mobile station (MS), a mobile terminal (MT) and so on. The terminal is a device that provides speech and/or data connectivity to a user. For example, the terminal may be a handheld device or a vehicle-mounted device with a wireless connection function. At present, an example of the terminal includes a mobile phone, a customer premise equipment (CPE), a pocket personal computer (PPC), a palmtop computer, a personal digital assistant (PDA), a laptop, a tablet, a wearable device, a vehicle-mounted device and so on. In addition, in a V2X communication system, the terminal may also be a vehicle-mounted device. It may be understood that the embodiments of the present disclosure do not limit a specific technology and a specific device form adopted by the terminal.

In the embodiments of the present disclosure, the network device 110 and the terminal 120 may adopt any feasible wireless communication technology to achieve mutual data transmission. A transmission channel for the network device 110 to send data or control information to the terminal 120 is called a downlink (DL) channel, and a transmission channel for the terminal 120 to send data or control information to the network device 110 is called an uplink (UL) channel. It may be understood that the network device in the embodiments of the present disclosure may be a base station. Of course, the network device may also be any other possible network device, and the terminal may be any possible terminal, which is not limited in the present disclosure.

In a new radio (NR) system, a basic unit of a physical downlink control channel (PDCCH) is a resource element group (REG). One REG corresponds to one physical resource block (PRB) (12 REs) in a frequency domain and corresponds to one orthogonal frequency division multiplexing (OFDM) symbol in a time domain. A plurality of REGs form a REG bundle, and one or more REG bundles form a control channel element (CCE). One CCE generally includes 6 REGs. In the current NR system, one PDCCH may be composed of 1, 2, 4, 8, or 16 CCEs. A number of CCEs included in one PDCCH is called an aggregation level. When the terminal is in a good channel condition, a PDCCH with a smaller aggregation level may be selected; when the terminal is in a poor channel condition, a PDCCH with a greater aggregation level is selected.

When the terminal needs to perform PDCCH transmission, the PDCCH transmission is performed via a control resource set (CORESET). The terminal needs to obtain the resource configuration information of the CORESET from the network device. The network device configures 1 to 3 OFDM symbols for the CORESET in the time domain and configures a plurality of PRBs in the frequency domain. The CORESET may be shared by a plurality of PDCCHs, and a plurality of PDCCH candidates will be mapped into the CORESET according to a preset rule.

In the related art, the PDCCH candidates are mapped according to the preset rule into one or more CCEs corresponding to the PDCCH candidates in the CORESET. Each CCE includes a plurality of REG bundles, and the plurality of REG bundles include 6 REGs in total. Each CCE is mapped onto an REG bundle in the CORESET.

As shown in FIG. 2, a PDCCH candidate is mapped according to the preset rule into a CCE2 in the CORESET. The CCE2 includes three REG bundles, each of which each includes two REGs. The CCE2 is mapped onto REGs included in the REG bundle in the CORESET in a manner of first mapping in the frequency domain and then mapping in the time domain. That is, an REG bundle1 in the CCE2 is mapped onto an REG4 and an REG5, an REG bundle2 is mapped onto an REG10 and an REG11, an REG bundle3 is mapped onto an REG18 and an REG19.

Currently, it is considered to enable the terminal to support NR technology using frequency bands with a smaller system bandwidth, in which the frequency bands mainly provide a service for dedicated applications, such as a dedicated communication of a power system/a railway system, and public protection and disaster relief in some countries and regions. For example, the frequency bands are those with band numbers n8, n26, n28, and n100. Generally, the n8, n26, n28 support a system bandwidth of 3MHz, and the n100 supports a system bandwidth of 2.8 MHz to 3.6MHz. Due to the smaller system bandwidth, there are fewer resources that may be transmitted on these frequency bands. For example, an entire system bandwidth may have only 13~19 PRBs. Due to the reduction in transmission resources, the coverage of the PDCCH deteriorates. Furthermore, since the current NR system specifies that a number of PRBs for the CORESET transmitting the PDCCH should be an integer multiple of 6, the transmission resources available for the PDCCH are further reduced, further deteriorating the coverage of the PDCCH.

Based on this, the embodiments of the present disclosure provide a method for resource configuration. When the network device configures the CORESET for the terminal, the resource configuration requirement for configuring the first CORESET is determined, and the first CORESET is configured based on the resource configuration requirement. Therefore, the network device may configure the frequency domain resource for the CORESET based on the resource configuration requirement corresponding to the CORESET, thus achieving more flexible configuration of the CORESET and improving the resource utilization.

FIG. 3 is a flowchart illustrating a method for resource configuration according to an exemplary embodiment. As shown in FIG. 3, the method for resource configuration is performed by a network device and includes S11 and S12.

At S11, a resource configuration requirement is determined.

The resource configuration requirement indicates a requirement that needs to be satisfied by a frequency domain resource included in a first CORESET configured for a terminal.

Specifically, the network device may determine a resource configuration requirement for configuring the CORESET. The resource configuration requirement may, for example, be a limit on a number of PRBs occupied by the CORESET. In some possible implementations, the resource configuration requirement may be that the number of PRBs configured for the CORESET is an integer multiple of 6. In some possible implementations, the resource configuration requirement may be that the number of PRBs configured for the CORESET is not an integer multiple of 6.

At S12, the first CORESET is configured based on the resource configuration requirement.

Specifically, the network device may determine one or more resource configuration requirements and use a corresponding resource configuration requirement under a preset condition. The network device may perform periodic or aperiodic detection for the preset condition. For example, in some possible implementations, in response to the network device determining that a first condition is satisfied, the first CORESET may be configured based on a first resource configuration requirement. In other possible implementations, in response to the network device determining that a second condition is satisfied and/or a first condition is not satisfied, the first CORESET may be configured based on a second resource configuration requirement, in which the second resource configuration requirement is different from the first resource configuration requirement. Or, in response to the network device determining that the second condition is satisfied and/or the first condition is not satisfied, it is determined not to configure the first CORESET based on the first resource configuration requirement.

In some embodiments, the first condition may be: a frequency band for transmitting a PDCCH being located in a first set; a system bandwidth of a frequency band for transmitting a PDCCH being greater than a first threshold; or a protocol release of the terminal corresponding to Release 15, Release 16, or Release 17. The second condition may be: a frequency band for transmitting a PDCCH being located in a second set; a system bandwidth of a frequency band for transmitting a PDCCH being less than a second threshold; or a release number corresponding to a protocol release of the terminal being higher than a release number of Release 17. Of course, the situations covered by the first condition and the second condition are not limited to the situations in the embodiments of the present disclosure.

In some embodiments, the first resource configuration requirement may be that the number of PRBs configured for the first CORESET is an integer multiple of 6, and the second resource configuration requirement may be that the number of PRBs configured for the first CORESET enables the first CORESET to include an integer multiple of CCEs.

In some embodiments, the network device determines that the first condition is satisfied, configures the first CORESET based on the first resource configuration requirement. In response to an actual frequency domain resource configured by the network device for the first CORESET not satisfying the first resource configuration requirement, the network device may configure a virtual frequency domain resource for the first CORESET, so that the frequency domain resource of the first CORESET (second CORESET) configured with the virtual frequency domain resource satisfies the first resource configuration requirement.

In some embodiments, when the network device constructs a REG bundle and/or a CCE based on the frequency domain resource in the CORESET, the REG bundle and/or the CCE may be constructed based on the second CORESET.

In some embodiments, the network device determines that a transmission mode for transmitting the PDCCH is configured as interleaved transmission, the network device may perform the interleaved transmission of the PDCCH based on the frequency domain resource in the second CORESET.

In some embodiments, the network device determines that a CCE corresponding to a PDCCH candidate transmitted based on the second CORESET includes the virtual frequency domain resource, and the network device may perform rate matching based on the actual frequency domain resource.

In some embodiments, the network device determines that a CCE corresponding to a PDCCH candidate transmitted based on the second CORESET includes the virtual frequency domain resource, and directly performs rate matching based on an aggregation level corresponding to the PDCCH candidate regardless of the actual frequency domain resource or the virtual frequency domain resource. Furthermore, when performing resource mapping between the PDCCH and a frequency domain resource, in response to a mapping object of the PDCCH being the virtual frequency domain resource, the network device discards a transmission symbol corresponding to the virtual frequency domain resource.

In the embodiments of the present disclosure, when the network device configures the CORESET for the terminal, the network device determines the resource configuration requirement for configuring the first CORESET, and configures the first CORESET based on the resource configuration requirement. Therefore, the network device may configure the frequency domain resource for the CORESET based on the resource configuration requirement corresponding to the CORESET, achieving more flexible configuration of the CORESET and improving the resource utilization.

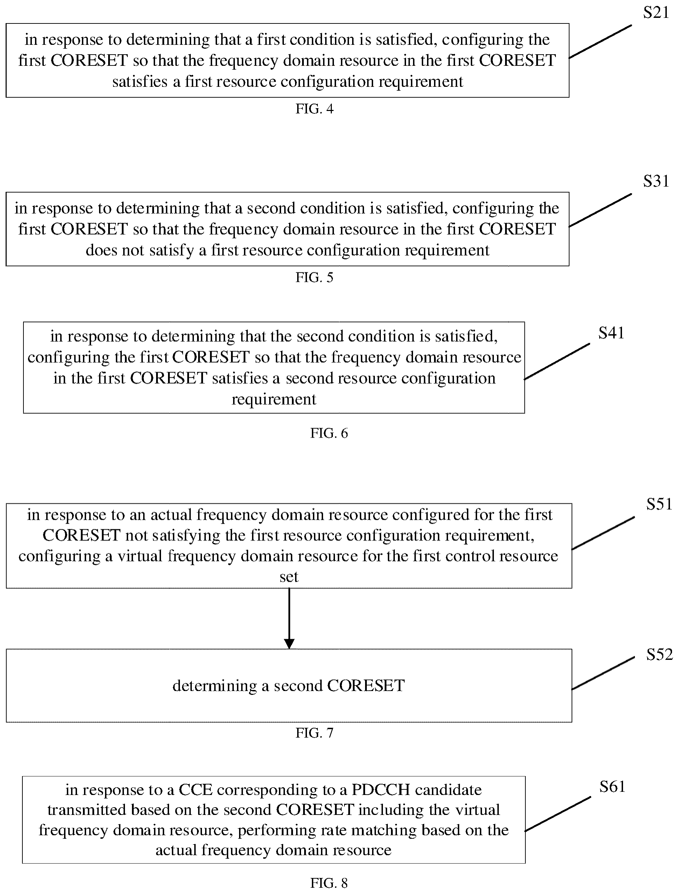

In the method for resource configuration according to the embodiments of the present disclosure, in response to determining that a first condition is satisfied, it is determined that the frequency domain resource in the first CORESET satisfies a first resource configuration requirement. As shown in FIG. 4, the method includes S21.

At S21, in response to determining that a first condition is satisfied, the first CORESET is configured so that the frequency domain resource in the first CORESET satisfies a first resource configuration requirement.

In the method for resource configuration according to the embodiments of the present disclosure, the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, the first condition includes that the frequency band for transmitting the PDCCH is located in the first set.

For example, the first set includes frequency bands with band numbers n10 to n25, and the frequency band for transmitting the PDCCH is a frequency band with the band number n18, so that the frequency band for transmitting the PDCCH is located in the first set, which satisfies the first condition.

In some embodiments, the first set may be preset in a certain signaling or the first set is based on a protocol agreement. After the network device determines the first set via the signaling or the protocol, it compares the frequency band for transmitting the PDCCH with each frequency band in the first set to determine whether the frequency band for transmitting the PDCCH is located in the first set. It should be understood that the network device knows the frequency band for transmitting the PDCCH.

In an implementation, the first condition includes that the system bandwidth of the frequency band for transmitting the PDCCH is greater than the first threshold.

The first threshold is determined according to a communication protocol or the first threshold is a preset value. For example, the first threshold may be preset to 5MHz or 10MHz, etc.

In some embodiments, the first threshold may be preset in a certain signaling or the first condition is based on a protocol agreement. After the network device determines the first condition via the signaling or the protocol, it compares the system bandwidth of the frequency band for transmitting the PDCCH with the first threshold to determine whether the system bandwidth of the frequency band for transmitting the PDCCH is greater than the first threshold. It should be understood that the network device knows the system bandwidth of the frequency band for transmitting the PDCCH.

In an implementation, the first condition includes that the protocol release of the terminal corresponds to Release 15, Release 16, or Release 17.

It is worth noting that when the protocol release of the terminal corresponds to Release 15, Release 16, or Release 17, both a system bandwidth of the terminal and a system bandwidth of the network device when transmitting the PDCCH are greater than the first threshold.

In some embodiments, the network device may determine the protocol release of the terminal based on capability information of the terminal or based on the communication protocol.

In the embodiments of the present disclosure, the above implementations may be arbitrarily combined. For example, if the frequency band for transmitting the PDCCH is located in the first set and the system bandwidth of the frequency band is greater than the first threshold, it is indicated that the first condition is satisfied.

In the embodiments of the present disclosure, when the first condition is satisfied, it indicates that the system bandwidth of the frequency band for transmitting the PDCCH is large enough and the resources transmitted in the frequency band are sufficient, which will not deteriorate the coverage of the PDCCH. At this time, the first CORESET may be directly configured based on the first resource configuration requirement.

In the method for resource configuration according to the embodiments of the present disclosure, in response to determining that a second condition is satisfied, it is determined that the frequency domain resource in the first CORESET configured for the terminal does not satisfy a first resource configuration requirement. As shown in FIG. 5, the method includes S31.

At S31, in response to determining that a second condition is satisfied, the first CORESET is configured so that the frequency domain resource in the first CORESET does not satisfy a first resource configuration requirement.

In the embodiments of the present disclosure, when it is determined that the second condition is satisfied, the frequency domain resource configured for the first CORESET may not satisfy the first resource configuration requirement, and the first CORESET may be directly configured.

In the method for resource configuration according to the embodiments of the present disclosure, the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the second condition includes that the frequency band for transmitting the PDCCH is located in the second set.

For example, the second set includes frequency bands with the band numbers n8, n26, n28, and n100. If the frequency band for transmitting the PDCCH is with the band number n28, the frequency band for transmitting the PDCCH is located in the second set, which satisfies the second condition.

In an implementation, the second condition includes that the system bandwidth of the frequency band for transmitting the PDCCH is less than the second threshold.

The second threshold is determined according to the communication protocol or the second threshold is a preset value. For example, the second threshold may be preset to 5MHz.

In an implementation, the release number corresponding to the protocol release of the terminal is higher than the release number of Release 17, such as Release 18, etc.

It is worth noting that when the release number corresponding to the protocol release of the terminal is higher than the release number of Release 17, there may be a situation where the system bandwidth for transmitting the PDCCH between the terminal and the network device is too small. Therefore, when the protocol release of the terminal is higher than Release 17, configuration may not follow the first resource configuration requirement.

In the embodiments of the present disclosure, when the second condition is satisfied, it indicates that the system bandwidth is smaller, and the resources that may be transmitted on a corresponding frequency band are also fewer, which results in fewer transmission resources available for the PDCCH and deteriorates the coverage of the PDCCH. Therefore, when the second condition is satisfied, there is no need to configure the first CORESET according to the first resource configuration requirement, which avoids the situation where the coverage of the PDCCH is poor.

In the method for resource configuration according to the embodiments of the present disclosure, the frequency domain resource in the first CORESET includes a number of PRBs occupied by the first CORESET.

In the method for resource configuration according to the embodiments of the present disclosure, a first resource configuration requirement indicates that the number of PRBs configured for the first CORESET is an integer multiple of N, where N is a positive integer.

In an implementation, when the N takes a value of 6, the first resource configuration requirement is used to indicate that the number of PRBs configured for the first CORESET is an integer multiple of 6.

For example, the number of PRBs configured for the first CORESET is 6, 12, 18, 24, etc.

In the embodiments of the present disclosure, when the first condition is satisfied, the number of PRBs configured for the first CORESET is the integer multiple of N. When the second condition is satisfied, the number of PRBs configured for the first CORESET may not be the integer multiple of N, thus enabling more resources to be transmitted on the system bandwidth and improving the coverage of the PDCCH.

In the method for resource configuration according to the embodiments of the present disclosure, when it is determined that the second condition is satisfied, to avoid a resource waste caused by an excessive frequency domain resource configured for the first CORESET, the embodiments of the present disclosure also provide a method for resource configuration. As shown in FIG. 6, the method includes S41.

At S41, in response to determining that the second condition is satisfied, the first CORESET is configured so that the frequency domain resource in the first CORESET satisfies a second resource configuration requirement.

In the embodiments of the present disclosure, when it is determined that the second condition is satisfied, the frequency domain resource configured for the first CORESET needs to satisfy the second resource configuration requirement, which prevents the network device from arbitrarily configuring the frequency domain resource for the first CORESET and thus avoids the resource waste.

In the method for resource configuration according to the embodiments of the present disclosure, the second resource configuration requirement is used to indicate that the frequency domain resource configured for the first CORESET, so that the first CORESET includes an integer multiple of CCEs.

For example, if 16 PRBs and 2 OFDM symbols are configured for the first CORESET, there are 32 REGs in total. Since one CCE includes 6 REGs, 32 REGs may form 5 CCEs, but the rest 2 REGs may not form a complete CCE. At this time, the frequency domain resource configured for the first CORESET may not enable the first CORESET to include the integer multiple of CCEs.

For another example, if 15 PRBs and 2 OFDM symbols are configured for the first CORESET, there are 30 REGs in total. Since one CCE includes 6 REGs, 30 REGs may form 5 complete CCEs. At this time, the frequency domain resource configured for the first CORESET enable the first CORESET to include the integer multiple of CCEs.

In the embodiments of the present disclosure, for the PDCCH satisfying the second condition, the second resource configuration requirement no longer restricts the number of PRBs configured for the first CORESET to be the integer multiple of N, while the number of PRBs configured for the first CORESET is satisfied, which enables the first CORESET to include the integer multiple of CCEs. As such, the network device may configure the CORESET with a system bandwidth which is greater than the system bandwidth supported by the terminal, which avoids the resource waste while improving the coverage of the PDCCH.

In the method for resource configuration according to the embodiments of the present disclosure, when the frequency domain resource configured by the network device for the first CORESET does not satisfy the first resource configuration requirement, the embodiments of the present disclosure also provide a method for resource configuration. As shown in FIG. 7, the method includes S51 and S52.

At S51, in response to an actual frequency domain resource configured for the first CORESET not satisfying the first resource configuration requirement, a virtual frequency domain resource is configured for the first CORESET.

The actual frequency domain resource is used for transmitting the PDCCH, and the virtual frequency domain resource does not carry any information. The main purpose of the virtual frequency domain resource is that when the actual frequency domain resource in the first CORESET does not satisfy the first resource configuration requirement, in order to facilitate processing of the first CORESET, the frequency domain resource in the first CORESET is padded with the virtual frequency domain resource, so that the padded first CORESET satisfies the first resource configuration requirement.

It is worth noting that the network device and the terminal know a location of the virtual frequency domain resource by default, so that the network device and the terminal may process the virtual frequency domain resource, for example, the network device discards a transmission symbol corresponding to the virtual frequency domain resource, or the terminal pads a transmission symbol corresponding to the virtual frequency domain resource, or the like.

At S52, a second CORESET is determined.

The frequency domain resource in the second CORESET include the actual frequency domain resource and the virtual frequency domain resource in the first CORESET, and the frequency domain resource in the second CORESET satisfies the first resource configuration requirement.

For example, the first resource configuration requirement indicates that the number of PRBs configured for the first CORESET is an integer multiple of 6, but the network device configures 10 REGs for the first CORESET, which does not satisfy the first resource configuration requirement. At this time, it is necessary to configure two virtual frequency resources for the first CORESET, so that the first CORESET includes 12 REGs, corresponding to 12 PRBs, and thus the frequency domain resource in the first CORESET satisfies the first resource configuration requirement.

In the method for resource configuration according to the embodiments of the present disclosure, the REG bundle and/or the CCE are constructed based on the frequency domain resource in the second CORESET. One CCE includes at least one REG bundle.

For example, the second CORESET occupies 18 PRBs, corresponding to 18 REGs, in which frequency domain resources of 15 REGs are actual frequency domain resources, and frequency domain resources of 3 REGs are virtual frequency domain resources. When the REG bundle and the CCE are constructed, the construction is performed based on 18 REGs, that is, 3 CCEs may be constructed, each of which includes at least one REG bundle.

In the method for resource configuration according to the embodiments of the present disclosure, in response to a transmission mode for transmitting the PDCCH based on the first CORESET being configured as interleaved transmission, the interleaved transmission of the PDCCH is performed based on the second CORESET.

When the transmission mode of the PDCCH is configured as the interleaved transmission, mapping from the CCE to the REG is interleaved mapping, that is, REGs mapped by different CCEs are non-continuous REGs.

In one implementation, when a channel state is unstable, the network device may configure the transmission mode of the PDCCH as the interleaved transmission; or, when the network device may not accurately know the channel state, the network device configures the transmission mode of the PDCCH as the interleaved transmission. This is because that a poor channel transmission characteristic and influence of various interferences and noises may cause transmission errors, most of which appear as information string bits in a long burst form; although channel coding may correct erroneous bits or limited continuous erroneous bits, when the channel is unstable or the channel state is uncertain, the channel coding may not accurately correct them. Therefore, the interleaved transmission is adopted to avoid the transmission errors. In some embodiments of the method for resource configuration according to the embodiments of the present disclosure, the embodiments of the present disclosure also provide a method for rate matching. As shown in FIG. 8, the method includes S61.

At S61, in response to a CCE corresponding to a PDCCH candidate transmitted based on the second CORESET including the virtual frequency domain resource, rate matching is performed based on the actual frequency domain resource.

The rate matching means that bits on the transmission channel are repeatedly transmitted or punctured, so that a number of bits after the rate matching is the same as a number of resources that may actually be transmitted.

For example, if the CCE corresponding to the PDCCH candidate includes 12 REGs in total, in which frequency domain resources of 10 REGs are actual frequency domain resources and frequency domain resources of 2 REGs are virtual frequency domain resources, and then the rate matching is performed based on the 10 REGs corresponding to the actual frequency domain resources.

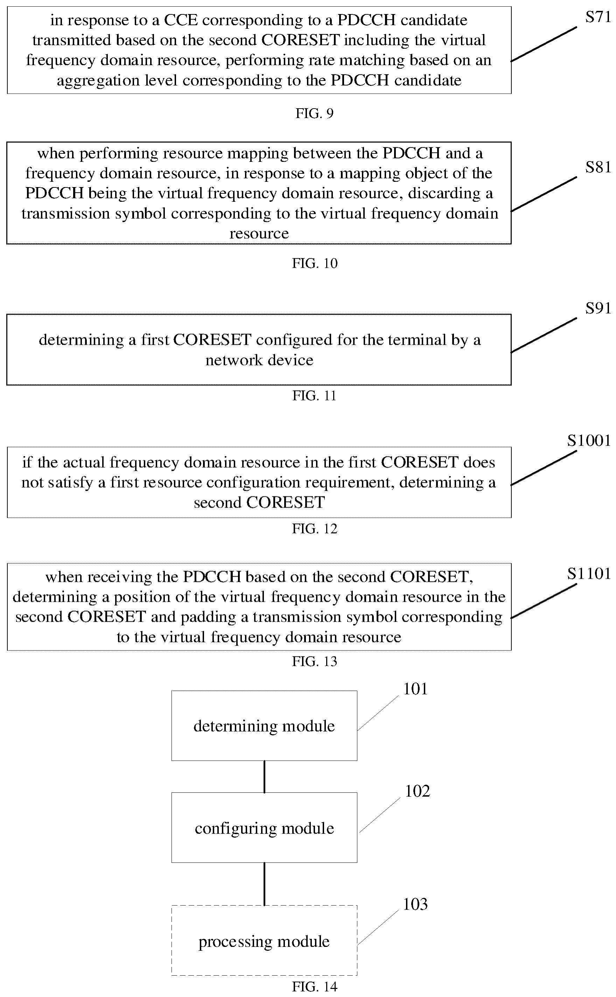

In other embodiments of the method for resource configuration according to the embodiments of the present disclosure, the embodiments of the present disclosure also provide a method for rate matching. As shown in FIG. 9, the method includes S71.

At S71, in response to a CCE corresponding to a PDCCH candidate transmitted based on the second CORESET including the virtual frequency domain resource, rate matching is performed based on an aggregation level corresponding to the PDCCH candidate.

For example, if the CCE corresponding to the PDCCH candidate includes 12 REGs in total, in which frequency domain resources of 10 REGs are actual frequency domain resources and frequency domain resources of 2 REGs are virtual frequency domain resources. If transmission symbols corresponding to 12 REGs are 120 bits and the channel may actually transmit 120 bits. At this time, without considering the virtual frequency domain resources, the rate matching is directly performed based on the number of CCEs included in the PDCCH candidate, that is, the aggregation level.

In the method for resource configuration according to the embodiments of the present disclosure, since the virtual frequency domain resource is not considered in the rate matching, when performing resource mapping, the embodiments of the present disclosure also provide a method for resource mapping. As shown in FIG.10, the method includes S81.

At S81, when performing resource mapping between the PDCCH and a frequency domain resource, in response to a mapping object of the PDCCH being the virtual frequency domain resource, a transmission symbol corresponding to the virtual frequency domain resource is discarded.

Correspondingly, when the terminal receives the PDCCH based on the second CORESET, the transmission symbol corresponding to the virtual frequency domain resource is padded.

Based on the same concept, the embodiments of the present disclosure also provide a method for resource configuration, performed by a terminal.

FIG. 11 is a flowchart illustrating a method for resource configuration according to an exemplary embodiment. As shown in FIG. 11, the method for resource configuration is performed by a terminal and includes S91.

At S91, a first CORESET configured for the terminal by a network device is determined.

The first CORESET is determined based on a resource configuration requirement, and the resource configuration requirement is used to determine a requirement that needs to be satisfied by a frequency domain resource included in the first CORESET.

Specifically, the terminal determines the first CORESET that is configured by the network device based on the resource configuration requirement. The resource configuration requirement may, for example, be a limit on a number of PRBs occupied by the CORESET. In some possible implementations, the resource configuration requirement may be that the number of PRBs configured for the CORESET is an integer multiple of 6. In some possible implementations, the resource configuration requirement may be that the number of PRBs configured for the CORESET is not an integer multiple of 6.

In some embodiments, there may be one or more resource configuration requirements, and the network device uses a corresponding resource configuration requirement under a preset condition. The network device may perform periodic or aperiodic detection for the preset condition. For example, in some possible implementations, it is determined that a first condition is satisfied, and the frequency domain resource in the first CORESET satisfies a first resource configuration requirement. In other possible implementations, it is determined that a second condition is satisfied and/or a first condition is not satisfied, and frequency domain resource in the first CORESET satisfies a second resource configuration requirement, in which the second resource configuration requirement is different from the first resource configuration requirement. Or, it is determined that that the second condition is satisfied and/or the first condition is not satisfied, the frequency domain resource in the first CORESET may not satisfy the second resource configuration requirement.

In some embodiments, the first condition may be: a frequency band for transmitting a PDCCH being located in a first set; a system bandwidth of a frequency band for transmitting a PDCCH being greater than a first threshold; or a protocol release of the terminal corresponding to Release 15, Release 16, or Release 17. The second condition may be: a frequency band for transmitting a PDCCH being located in a second set; a system bandwidth of a frequency band for transmitting a PDCCH being less than a second threshold; or a release number corresponding to a protocol release of the terminal being higher than a release number of Release 17. Of course, the situations covered by the first condition and the second condition are not limited to the situations in the embodiments of the present disclosure.

In some embodiments, the first resource configuration requirement may be that the number of PRBs configured for the first CORESET is an integer multiple of 6, and the second resource configuration requirement may be that the number of PRBs configured for the first CORESET enables the first CORESET to include an integer multiple of CCEs.

In some embodiments, if an actual frequency domain resource in the first CORESET configured for the terminal by the network device does not satisfy the first resource configuration requirement, the terminal may determine a second CORESET, in which the frequency domain resource in the second CORESET include the actual frequency domain resource and the virtual frequency domain resource in the first CORESET, so that the frequency domain resource in the second CORESET satisfies the first resource configuration requirement.

In some embodiments, when the terminal receives the PDCCH based on the second CORESET, since the terminal knows a location of the virtual frequency domain resource in the second CORESET, a transmission symbol corresponding to the virtual frequency domain resource may be padded.

In the embodiments of the present disclosure, when the network device configures the CORESET for the terminal, the resource configuration requirement for configuring the first CORESET is determined, and the first CORESET is configured based on the resource configuration requirement. Therefore, the network device may configure the frequency domain resource for the CORESET based on the resource configuration requirement corresponding to the CORESET, thus achieving more flexible configuration of the CORESET and improving the resource utilization.

In the method for resource configuration according to the embodiments of the present disclosure, it is determined that a first condition is satisfied, and the frequency domain resource in the first CORESET satisfies the first resource configuration requirement.

In the method for resource configuration according to the embodiments of the present disclosure, the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, the first condition includes that the frequency band for transmitting the PDCCH is located in the first set.

For example, the first set includes frequency bands with band numbers n10 to n25, and the frequency band for transmitting the PDCCH is a frequency band with the band number n18, so that the frequency band for transmitting the PDCCH is located in the first set, which satisfies the first condition.

In some embodiments, the first set may be preset in a certain signaling or the first set is based on a protocol agreement. After the network device determines the first set via the signaling or the protocol, it compares the frequency band for transmitting the PDCCH with each frequency band in the first set to determine whether the frequency band for transmitting the PDCCH is located in the first set. It should be understood that the network device knows the frequency band for transmitting the PDCCH.

In an implementation, the first condition includes that the system bandwidth of the frequency band for transmitting the PDCCH is greater than the first threshold.

The first threshold is determined according to the communication protocol or the first threshold is a preset value. For example, the first threshold may be preset to 5MHz or 10MHz, etc.

In some embodiments, the first threshold may be preset in a certain signaling or the first condition is based on a protocol agreement. After the network device determines the first condition via the signaling or the protocol, it compares the system bandwidth of the frequency band for transmitting the PDCCH with the first threshold to determine whether the system bandwidth of the frequency band for transmitting the PDCCH is greater than the first threshold. It should be understood that the network device knows the system bandwidth of the frequency band for transmitting the PDCCH.

In an implementation, the first condition includes that the protocol release of the terminal corresponds to Release 15, Release 16, or Release 17.

It is worth noting that when the protocol release of the terminal corresponds to Release 15, Release 16, or Release 17, a system bandwidth of both the terminal and a system bandwidth of the network device when transmitting the PDCCH are greater than the first threshold.

In some embodiments, the network device may determine the protocol release of the terminal based on capability information of the terminal or based on the communication protocol.

In the embodiments of the present disclosure, the above implementations may be arbitrarily combined. For example, if the frequency band for transmitting the PDCCH is located in the first set and the system bandwidth of the frequency band is greater than the first threshold, it is indicated that the first condition is satisfied.

In the embodiments of the present disclosure, when the first condition is satisfied, it indicates that the system bandwidth of the frequency band for transmitting the PDCCH is large enough and the resources transmitted in the frequency band are sufficient, which will not deteriorate the coverage of the PDCCH. At this time, the first CORESET may be directly configured based on the first resource configuration requirement.

In the method for resource configuration according to the embodiments of the present disclosure, it is determined that a second condition is satisfied, and the frequency domain resource in the first CORESET does not satisfy a first resource configuration requirement.

In the embodiments of the present disclosure, when it is determined that the second condition is satisfied, the frequency domain resource configured for the first CORESET may not satisfy the first resource configuration requirement, and the first CORESET may be directly configured.

In the method for resource configuration according to the embodiments of the present disclosure, the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the second condition includes that the frequency band for transmitting the PDCCH is located in the second set.

For example, the second set includes frequency bands with the band numbers n8, n26, n28, and n100. If the frequency band for transmitting the PDCCH is with the band number n28, the frequency band for transmitting the PDCCH is located in the second set, which satisfies the second condition.

In an implementation, the second condition includes that the system bandwidth of the frequency band for transmitting the PDCCH is less than the second threshold.

The second threshold is determined according to the communication protocol or the second threshold is a preset value. For example, the second threshold may be preset to 5MHz.

In an implementation, the release number corresponding to the protocol release of the terminal is higher than the release number of Release 17, such as Release 18, etc.

It is worth noting that when the release number corresponding to the protocol release of the terminal is higher than the release number of Release 17, there may be a situation where the system bandwidth for transmitting the PDCCH between the terminal and the network device is too small. Therefore, when the protocol release of the terminal is higher than Release 17, configuration may not follow the first resource configuration requirement.

In the embodiments of the present disclosure, when the second condition is satisfied, it indicates that the system bandwidth is small, and the resources that may be transmitted on a corresponding frequency band are also fewer, which results in fewer transmission resources available for the PDCCH and deteriorates the coverage of the PDCCH. Therefore, when the second condition is satisfied, there is no need to configure the first CORESET according to the first resource configuration requirement, which avoids the situation where the coverage of the PDCCH is poor.

In the method for resource configuration according to the embodiments of the present disclosure, the frequency domain resource in the first CORESET includes a number of PRBs occupied by the first CORESET.

In the method for resource configuration according to the embodiments of the present disclosure, a first resource configuration requirement indicates that the number of PRBs configured for the first CORESET is an integer multiple of N, where N is a positive integer.

In an implementation, when the N takes a value of 6, the first resource configuration requirement is used to indicate that the number of PRBs configured for the first CORESET is an integer multiple of 6.

For example, the number of PRBs configured for the first CORESET is 6, 12, 18, 24, etc.

In the embodiments of the present disclosure, when the first condition is satisfied, the number of PRBs configured for the first CORESET is the integer multiple of N. When the second condition is satisfied, the number of PRBs configured for the first CORESET may not be the integer multiple of N, thus enabling more resources to be transmitted on the system bandwidth and improving the coverage of the PDCCH.

In the method for resource configuration according to the embodiments of the present disclosure, when it is determined that the second condition is satisfied, the frequency domain resource in the first CORESET satisfies a second resource configuration requirement.

In the embodiments of the present disclosure, when the network device determines that the second condition is satisfied, the frequency domain resource configured for the first CORESET needs to satisfy the second resource configuration requirement, which prevents the network device from arbitrarily configuring the frequency domain resource for the first CORESET and thus avoids the resource waste.

In the method for resource configuration according to the embodiments of the present disclosure, the second resource configuration requirement is used to indicate that the frequency domain resource configured for the first CORESET, so that the first CORESET includes an integer multiple of CCEs.

For example, if 16 PRBs and 2 OFDM symbols are configured for the first CORESET, there are 32 REGs in total. Since one CCE includes 6 REGs, 32 REGs may form 5 CCEs, but the rest 2 REGs may not form a complete CCE. At this time, the frequency domain resource configured for the first CORESET may not enable the first CORESET to include the integer multiple of CCEs.

For another example, if 15 PRBs and 2 OFDM symbols are configured for the first CORESET, there are 30 REGs in total. Since one CCE includes 6 REGs, 30 REGs may form 5 complete CCEs. At this time, the frequency domain resource configured for the first CORESET enable the first CORESET to include the integer multiple of CCEs.

In the embodiments of the present disclosure, for the PDCCH satisfying the second condition, the second resource configuration requirement no longer restricts the number of PRBs configured for the first CORESET to be the integer multiple of N, while the number of PRBs configured for the first CORESET is satisfied, which enables the first CORESET to include the integer multiple of CCEs. As such, the network device may configure the CORESET with a system bandwidth which is greater than the system bandwidth supported by the terminal, which avoids the resource waste while improving the coverage of the PDCCH.

In the method for resource configuration according to the embodiments of the present disclosure, when the frequency domain resource configured by the network device for the first CORESET does not satisfy the first resource configuration requirement, the embodiments of the present disclosure also provide a method for resource configuration. As shown in FIG. 12, the method includes S1001.

At S1001, if the actual frequency domain resource in the first CORESET does not satisfy a first resource configuration requirement, a second CORESET is determined.

The frequency domain resource in the second CORESET include the actual frequency domain resource and the virtual frequency domain resource in the first CORESET, and the frequency domain resource in the second CORESET satisfies the first resource configuration requirement.

For example, the first resource configuration requirement indicates that the number of PRBs configured for the first CORESET is an integer multiple of 6, but the network device configures 10 REGs for the first CORESET, which does not satisfy the first resource configuration requirement. At this time, it is necessary to configure two virtual frequency resources for the first CORESET, so that the first CORESET includes 12 REGs, corresponding to 12 PRBs, and thus the frequency domain resource in the first CORESET satisfies the first resource configuration requirement.

Specifically, the actual frequency domain resource is used for transmitting the PDCCH, and the virtual frequency domain resource does not carry any information. The main purpose of the virtual frequency domain resource is that when the actual frequency domain resource in the first CORESET does not satisfy the first resource configuration requirement, in order to facilitate processing of the first resource set, the frequency domain resource in the first CORESET is padded with the virtual frequency domain resource, so that the padded first CORESET satisfies the first resource configuration requirement.

It is worth noting that the network device and the terminal know a location of the virtual frequency domain resource by default, so that the network device and the terminal may process the virtual frequency domain resource, for example, the network device discards a transmission symbol corresponding to the virtual frequency domain resource, or the terminal pads a transmission symbol corresponding to the virtual frequency domain resource, or the like.

In the method for resource configuration according to the embodiments of the present disclosure, the REG bundle and/or the CCE are constructed based on the frequency domain resource in the second CORESET. One CCE includes at least one REG bundle.

For example, the second CORESET occupies 18 PRBs, corresponding to 18 REGs, in which frequency domain resources of 15 REGs are actual frequency domain resources, and frequency domain resources of 3 REGs are virtual frequency domain resources. When the REG bundle and the CCE are constructed, the construction is performed based on 18 REGs, that is, 3 CCEs may be constructed, each of which includes at least one REG bundle.

In the method for resource configuration according to the embodiments of the present disclosure, when the terminal receives the PDCCH based on the second CORESET, since the second CORESET includes the virtual frequency domain resource, the transmission symbol corresponding to the virtual frequency domain resource needs to be padded. As shown in FIG. 13, the method includes S1101.

At S1101, when receiving the PDCCH based on the second CORESET, a position of the virtual frequency domain resource in the second CORESET is determined and a transmission symbol corresponding to the virtual frequency domain resource is padded.

In an implementation, in response to a CCE corresponding to a PDCCH candidate transmitted based on the second CORESET including the virtual frequency domain resource, the network device performs rate matching based on an aggregation level corresponding to the PDCCH candidate. When the network device performs resource mapping between the PDCCH and a frequency domain resource, in response to a mapping object of the PDCCH being the virtual frequency domain resource, the network device discards the transmission symbol corresponding to the virtual frequency domain resource.

It needs to be noted that those skilled in the art may understand that various implementations/embodiments mentioned above in the present disclosure may be used in combination with the above embodiments, or may be used independently. Whether used independently or in combination with the above embodiments, the implementation principle is similar. In the present disclosure, some embodiments are described in terms of implementations used together. Of course, those skilled in the art may understand that such examples do not limit the embodiments of the present disclosure.

Based on the same concept, the embodiments of the present disclosure also provide an apparatus for resource configuration.

It may be understood that, in the present disclosure, the apparatus for resource configuration is provided to implement the above functions, and the apparatus includes corresponding hardware structures and/or software modules for executing each function. In combination with units and algorithm steps of the examples described in the embodiments of the present disclosure, the embodiments of the present disclosure may be implemented in electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

FIG. 14 is a flowchart illustrating an apparatus for resource configuration according to an exemplary embodiment. Referring to FIG. 14, the apparatus includes a determining module 101 and a configuring module 102.

The determining module 101 is configured to determine a resource configuration requirement, in which the resource configuration requirement indicates a requirement that needs to be satisfied by a frequency domain resource included in a first CORESET configured for a terminal.

The configuring module 102 configures the first CORESET based on the resource configuration requirement.

In an implementation, the configuring module 102 configures, in response to determining that a first condition is satisfied, the first CORESET so that the frequency domain resource in the first CORESET satisfies a first resource configuration requirement, in which the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, the configuring module 102 configures, in response to determining that a second condition is satisfied, the first CORESET so that the frequency domain resource in the first CORESET does not satisfy a first resource configuration requirement, in which the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the frequency domain resource in the first CORESET includes a number of PRBs occupied by the first CORESET.

In an implementation, a first resource configuration requirement indicates that the number of PRBs configured for the first CORESET is an integer multiple of N, where N is a positive integer.

In an implementation, the configuring module 102 configures, in response to determining that the second condition is satisfied, the first CORESET so that the frequency domain resource in the first CORESET satisfies a second resource configuration requirement.

In an implementation, the second resource configuration requirement indicates the frequency domain resource configured for the first CORESET so that the first CORESET includes an integer multiple of CCEs.

In an implementation, the configuring module 102 configures, in response to an actual frequency domain resource configured for the first CORESET not satisfying the first resource configuration requirement, a virtual frequency domain resource for the first CORESET; and the determining module 101 is configured to determine a second CORESET, in which a frequency domain resource in the second CORESET includes the actual frequency domain resource and the virtual frequency domain resource in the first CORESET, and the frequency domain resource in the second CORESET satisfies the first resource configuration requirement.

In an implementation, the apparatus also includes a processing module 103. The processing module 103 is configured to construct an REG bundle and/or a CCE based on the frequency domain resource in the second CORESET, in which one CCE includes at least one REG bundle.

In an implementation, the processing module 103 is configured to, in response to a transmission mode for transmitting the PDCCH based on the first CORESET being configured as interleaved transmission, perform the interleaved transmission of the PDCCH based on the second CORESET.

In an implementation, the processing module 103 is configured to, in response to a CCE corresponding to a PDCCH candidate transmitted based on the second CORESET including the virtual frequency domain resource, perform rate matching based on the actual frequency domain resource.

In an implementation, the processing module 103 is configured to, in response to a CCE corresponding to a PDCCH candidate transmitted based on the second CORESET including the virtual frequency domain resource, perform rate matching based on an aggregation level corresponding to the PDCCH candidate.

In an implementation, the processing module 103 is configured to, when performing resource mapping between the PDCCH and a frequency domain resource, in response to a mapping object of the PDCCH being the virtual frequency domain resource, discard a transmission symbol corresponding to the virtual frequency domain resource.

With respect to the apparatus in the above embodiments, specific implementations in which each module performs an operation has been described in detail in the method embodiments and will not be elaborated here.

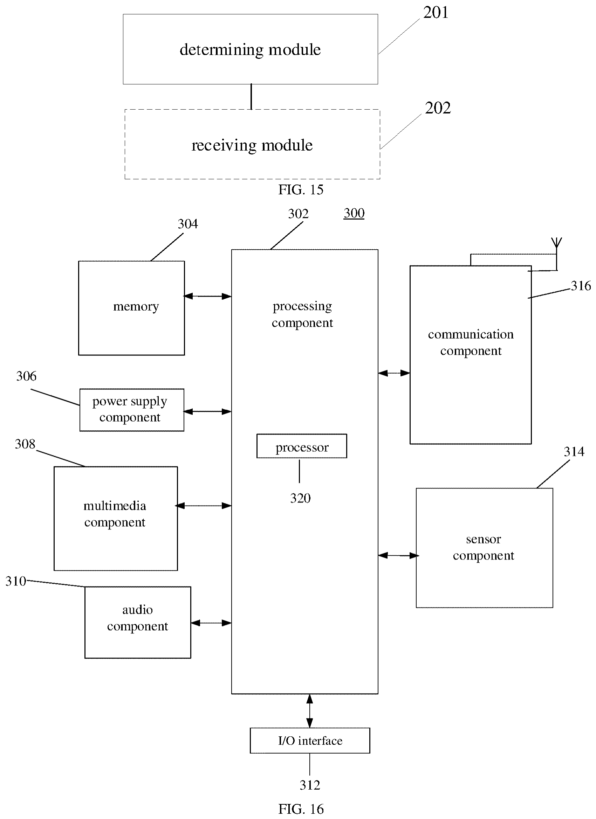

FIG. 15 is a flowchart illustrating an apparatus for resource configuration according to an exemplary embodiment. Referring to FIG. 15, the apparatus includes a determining module 201.

The determining module 201 is configured to determine a first CORESET configured for the terminal by a network device, in which the first CORESET is determined based on a resource configuration requirement, and the resource configuration requirement indicates a requirement that needs to be satisfied by a frequency domain resource included in the first CORESET.

In an implementation, when a first condition is satisfied, the frequency domain resource in the first CORESET satisfies a first resource configuration requirement, in which the first condition includes at least one of: a frequency band for transmitting a PDCCH being located in a first set; a system bandwidth of a frequency band for transmitting a PDCCH being greater than a first threshold; or a protocol release of the terminal corresponding to Release 15, Release 16, or Release 17.

In an implementation, it is determined that a second condition is satisfied, the frequency domain resource in the first CORESET does not satisfy a first resource configuration requirement, in which the second condition includes at least one of: a frequency band for transmitting a PDCCH being located in a second set; a system bandwidth of a frequency band for transmitting a PDCCH being less than a second threshold; or a release number corresponding to a protocol release of the terminal being higher than a release number of Release 17.

In an implementation, the frequency domain resource in the first CORESET includes a number of PRBs occupied by the first CORESET.

In an implementation, a first resource configuration requirement indicates that the number of PRBs configured for the first CORESET is an integer multiple of N, where N is a positive integer.

In an implementation, it is determined that the second condition is satisfied, the frequency domain resource in the first CORESET satisfies a second resource configuration requirement.

In an implementation, the second resource configuration requirement indicates the frequency domain resource configured for the first CORESET so that the first CORESET includes an integer multiple of CCEs.

In an implementation, the determining module 201 is also configured to, in response to an actual frequency domain resource in the first CORESET not satisfying the first resource configuration requirement, determine a second CORESET, in which a frequency domain resource in the second CORESET includes the actual frequency domain resource and the virtual frequency domain resource in the first CORESET, and the frequency domain resource in the second CORESET satisfies the first resource configuration requirement.

In an implementation, the apparatus also includes a receiving module 202. The receiving module 202 is configured to, when receiving the PDCCH based on the second CORESET, determine a position of the virtual frequency domain resource in the second CORESET and pad a transmission symbol corresponding to the virtual frequency domain resource.

FIG. 16 is a block diagram illustrating a device for resource configuration according to an exemplary embodiment. For example, the device 300 may be a mobile phone, a computer, a digital broadcast terminal, a messaging device, a game console, a tablet device, a medical device, an exercise device, a personal digital assistant, and so on.

Referring to FIG. 16, the device 300 may include one or more of: a processing component 302, a memory 304, a power component 306, a multimedia component 308, an audio component 310, an input/output (I/O) interface 312, a sensor component 314, and a communication component 316.

The processing component 302 normally controls the overall operation (such as operations associated with displaying, telephone calls, data communications, camera operations and recording operations) of the device 300. The processing component 302 may include one or a plurality of processors 320 to execute instructions so as to perform all or part of the steps of the above method. In addition, the processing component 302 may include one or a plurality of modules to facilitate interaction between the processing component 302 and other components. For example, the processing component 302 may include a multimedia unit to facilitate interaction between the multimedia component 308 and the processing component 302.

The memory 304 is configured to store various types of data to support operations at the device 300. Examples of such data include instructions for any application or method operated on the device 300, contact data, phone book data, messages, images, videos and so on. The memory 304 may be realized by any type of volatile or non-volatile storage devices, or a combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a disk or an optical disk.

The power component 306 provides power to various components of the device 300. The power component 306 may include a power management system, one or more power sources and other components associated with power generation, management, and distribution of the device 300.

The multimedia component 308 includes a screen that provides an output interface between the device 300 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touches, slides, and gestures on the touch panel. The touch sensor may sense not only the boundary of the touches or sliding actions, but also the duration and pressure related to the touches or sliding operations. In some embodiments, the multimedia component 308 includes a front camera and/or a rear camera. When the device 300 is in an operation mode such as a shooting mode or a video mode, the front camera and/or the rear camera may receive external multimedia data. Each front camera and rear camera may be a fixed optical lens system or have a focal length and an optical zoom capability.

The audio component 310 is configured to output and/or input an audio signal. For example, the audio component 310 includes a microphone (MIC) that is configured to receive an external audio signal when the device 300 is in an operation mode such as a call mode, a recording mode, and a voice recognition mode. The received audio signal may be further stored in the memory 304 or transmitted via the communication component 316. In some embodiments, the audio component 310 also includes a speaker for outputting audio signals.

The I/O interface 312 provides an interface between the processing component 302 and a peripheral interface unit. The peripheral interface unit may be a keyboard, a click wheel, a button and so on. These buttons may include, but are not limited to, a home button, a volume button, a start button, and a locking button.

The sensor assembly 314 includes one or more sensors for providing the device 300 with various aspects of status assessments. For example, the sensor component 314 may detect an ON/OFF state of the device 300 and a relative positioning of the components. For example, the components may be a display and a keypad of the device 300. The sensor component 314 may also detect a change in position of the device 300 or a component of the device 300, the presence or absence of contact of the user with the device 300, the orientation or acceleration/deceleration of the device 300 and a temperature change of the device 300. The sensor component 314 may include a proximity sensor configured to detect the presence of nearby objects without any physical contact. The sensor component 314 may also include a light sensor (such as a CMOS or a CCD image sensor) for use in imaging applications. In some embodiments, the sensor component 314 may also include an acceleration sensor, a gyro sensor, a magnetic sensor, a pressure sensor, or a temperature sensor.

The communication component 316 is configured to facilitate wired or wireless communication between the device 300 and other devices. The device 300 may access a wireless network based on a communication standard such as WIFI, 2G, 3G, or a combination thereof. In an exemplary embodiment, the communication component 316 receives broadcast signals or broadcast-associated information from an external broadcast management system via a broadcast channel. In an exemplary embodiment, the communication component 316 also includes a near field communication (NFC) module to facilitate short range communication. For example, the NFC module may be implemented based on radio frequency identification (RFID) technology, infrared data association (IrDA) technology, ultra-wide band (UWB) technology, Bluetooth (BT) technology and other technologies.

In an exemplary embodiment, the device 300 may be implemented by one or more application specific integrated circuits (ASICs), digital signal processors (DSPs), digital signal processing devices (DSPDs), programmable logic devices (PLDs), field programmable gate arrays (FPGA), controllers, microcontrollers, microprocessors, or other electronic components, so as to perform the above method.

In the embodiments of the present disclosure, a non-transitory computer readable storage medium including instructions is provided, such as the memory 304 including instructions. The instructions may be executed by a processor 320 of the device 300 to accomplish the above method. For example, the non-transitory computer readable storage medium may be a read-only memory (ROM), a random access memory (RAM), a compact disc read-only memory (CD-ROM), a tape, a floppy disk, an optical data storage device, etc.

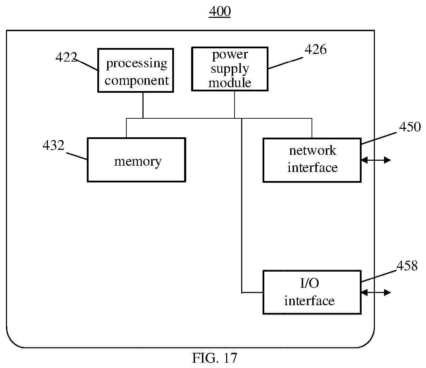

FIG. 17 is a block diagram illustrating a device for resource configuration according to an exemplary embodiment. For example, the device 400 may be provided as a network device. Referring to FIG. 17, the device 400 includes a processing component 422, which further includes one or more processors, and a memory resource represented by a memory 432 for storing instructions that may be executed by the processing component 422, such as an application. The application stored in the memory 432 may include one or more modules corresponding to a set of instructions for each of them. Furthermore, the processing component 422 is configured to execute instructions to implement the above method.

The device 400 may also include a power component 426 configured to perform power management of the device 400, a wired or wireless network interface 450 configured to connect the device 400 to a network, and an input/output (I/O) interface 458. The device 400 may operate an operating system stored in the memory 432, such as Windows Server ^{™}, Mac OS X^{™}, Unix ^{™}, Linux ^{™}, FreeBSD ^{™} and so on.

In the embodiments of the present disclosure, a non-transitory computer readable storage medium including instructions is also provided, such as the memory 432 including instructions. The instructions may be executed by the processing component 422 of the device 400 to implement the above method. For example, the non-transitory computer readable storage medium may be a ROM, an RAM, a CD-ROM, a magnetic tape, a floppy disk, an optical data storage device, etc.

It may be understood that the term "a plurality of" in the present disclosure refers to two or more than two, and other quantifiers are similar to it. The term "and/or" describes the relationship between associated objects, indicating that there may be three relationships, for example, A and/or B means A, A and B at the same time, and B. The character "/" generally indicates that the relationship between associated objects is an "or" relationship. The terms "a/an" and "the" in singular form also include plural forms, unless the context clearly indicates other meanings.

It may be further understood that meanings of terms such as "in response to", "if", or "when" involved in the present disclosure depend on context and an actual usage scenario. As used herein, the term "in response to" may be interpreted as "when", "in a case that", or "if".

It may be further understood that the terms "first", "second", etc. are used to describe various information, but such information should not be limited to these terms. These terms are only used to distinguish information of the same type from each other and do not indicate a particular order or precedence. In fact, the expressions "first", "second", etc. may be used interchangeably. For example, without departing from a scope of the present disclosure, first information may also be referred to as second information, and similarly, second information may also be referred to as first information.

It may be further understood that, in the embodiments of the present disclosure, although operations are described in a specific order in accompanying drawings, this should not be construed as performing such operations in a particular order or in a sequential order shown above, or performing all above operations to achieve a desirable result. In a certain environment, multitasking and parallel processing may be advantageous.

Other embodiments of the present disclosure will be apparent to those skilled in the art from consideration of the specification and practice of the present disclosure disclosed here. This application is intended to cover any variations, uses, or adaptations of the present disclosure following the general principles of the disclosure and including common knowledge or conventional technical means in the art that are not disclosed herein.

It may be understood that the present disclosure is not limited to the precise structure described above and shown in attached drawings, and various modifications and alterations may be made without going beyond the scope of the present disclosure. Therefore, the protection scope of the disclosure shall be subject to claims.

## Claims

1. A method for resource configuration, performed by a network device, comprising:
determining a resource configuration requirement, wherein the resource configuration requirement indicates a requirement that needs to be satisfied by a frequency domain resource comprised in a first control resource set (CORESET) configured for a terminal; and
configuring the first CORESET based on the resource configuration requirement.

2. The method of claim 1, wherein configuring the first CORESET based on the resource configuration requirement comprises:
in response to determining that a first condition is satisfied, configuring the first CORESET so that the frequency domain resource in the first CORESET satisfies a first resource configuration requirement,
wherein the first condition comprises at least one of:
a frequency band for transmitting a physical downlink control channel (PDCCH) being located in a first set;
a system bandwidth of a frequency band for transmitting a PDCCH being greater than a first threshold; or
a protocol release of the terminal corresponding to Release 15, Release 16, or Release 17.

3. The method of claim 1, wherein configuring the first CORESET based on the resource configuration requirement comprises:
in response to determining that a second condition is satisfied, configuring the first CORESET so that the frequency domain resource in the first CORESET does not satisfy a first resource configuration requirement,
wherein the second condition comprises at least one of:
a frequency band for transmitting a PDCCH being located in a second set;
a system bandwidth of a frequency band for transmitting a PDCCH being less than a second threshold; or
a release number corresponding to a protocol release of the terminal being higher than a release number of Release 17.

4. The method of any one of claims 1 to 3, wherein the frequency domain resource in the first CORESET comprises a number of physical resource blocks (PRBs) occupied by the first CORESET.

5. The method of claim 4, wherein a first resource configuration requirement indicates that the number of PRBs configured for the first CORESET is an integer multiple of N, where N is a positive integer.

6. The method of claim 3, further comprising:
in response to determining that the second condition is satisfied, configuring the first CORESET so that the frequency domain resource in the first CORESET satisfies a second resource configuration requirement.

7. The method of claim 6, wherein the second resource configuration requirement indicates the frequency domain resource configured for the first CORESET so that the first CORESET comprises an integer multiple of control channel elements (CCEs).

8. The method of claim 2, further comprising:
in response to an actual frequency domain resource configured for the first CORESET not satisfying the first resource configuration requirement, configuring a virtual frequency domain resource for the first CORESET; and
determining a second CORESET, wherein a frequency domain resource in the second CORESET comprises the actual frequency domain resource and the virtual frequency domain resource in the first CORESET, and the frequency domain resource in the second CORESET satisfies the first resource configuration requirement.

9. The method of claim 8, further comprising:
constructing a resource element group (REG) bundle and/or a CCE based on the frequency domain resource in the second CORESET, wherein one CCE comprises at least one REG bundle.

10. The method of claim 8 or 9, further comprising:
in response to a transmission mode for transmitting the PDCCH based on the first CORESET being configured as interleaved transmission, performing the interleaved transmission of the PDCCH based on the second CORESET.

11. The method of any one of claims 8 to 10, further comprising:
in response to a CCE corresponding to a PDCCH candidate transmitted based on the second CORESET comprising the virtual frequency domain resource, performing rate matching based on the actual frequency domain resource.

12. The method of any one of claims 8 to 10, further comprising:
in response to a CCE corresponding to a PDCCH candidate transmitted based on the second CORESET comprising the virtual frequency domain resource, performing rate matching based on an aggregation level corresponding to the PDCCH candidate.

13. The method of claim 12, further comprising:
when performing resource mapping between the PDCCH and a frequency domain resource, in response to a mapping object of the PDCCH being the virtual frequency domain resource, discarding a transmission symbol corresponding to the virtual frequency domain resource.

14. A method for resource configuration, performed by a terminal, comprising:
determining a first control resource set (CORESET) configured for the terminal by a network device,
wherein the first CORESET is determined based on a resource configuration requirement, and the resource configuration requirement indicates a requirement that needs to be satisfied by a frequency domain resource comprised in the first CORESET.

15. The method of claim 14, wherein it is determined that a first condition is satisfied, and the frequency domain resource in the first CORESET satisfies a first resource configuration requirement,
wherein the first condition comprises at least one of:
a frequency band for transmitting a physical downlink control channel (PDCCH) being located in a first set;
a system bandwidth of a frequency band for transmitting a PDCCH being greater than a first threshold; or
a protocol release of the terminal corresponding to Release 15, Release 16, or Release 17.

16. The method of claim 14, wherein it is determined that a second condition is satisfied, and the frequency domain resource in the first CORESET does not satisfy a first resource configuration requirement,
wherein the second condition comprises at least one of:
a frequency band for transmitting a PDCCH being located in a second set;
a system bandwidth of a frequency band for transmitting a PDCCH being less than a second threshold; or
a release number corresponding to a protocol release of the terminal being higher than a release number of Release 17.

17. The method of any one of claims 14 to 16, wherein the frequency domain resource in the first CORESET comprises a number of physical resource blocks (PRBs) occupied by the first CORESET.

18. The method of claim 17, wherein a first resource configuration requirement indicates that the number of PRBs configured for the first CORESET is an integer multiple of N, where N is a positive integer.

19. The method of claim 16, wherein it is determined that the second condition is satisfied, and the frequency domain resource in the first CORESET satisfies a second resource configuration requirement.

20. The method of claim 19, wherein the second resource configuration requirement indicates the frequency domain resource configured for the first CORESET so that the first CORESET comprises an integer multiple of control channel elements (CCEs).

21. The method of claim 15, further comprising:
if an actual frequency domain resource of the first CORESET does not satisfy the first resource configuration requirement, determining a second CORESET, wherein a frequency domain resource of the second CORESET comprises the actual frequency domain resource and a virtual frequency domain resource of the first CORESET, and the frequency domain resource in the second CORESET satisfies the first resource configuration requirement.

22. The method of claim 21, further comprising:
when receiving the PDCCH based on the second CORESET, determining a position of the virtual frequency domain resource in the second CORESET and padding a transmission symbol corresponding to the virtual frequency domain resource.

23. An apparatus for resource configuration, comprising:
a determining module, configured to determine a resource configuration requirement, wherein the resource configuration requirement indicates a requirement that needs to be satisfied by a frequency domain resource comprised in a first control resource set (CORESET) configured for a terminal; and
a configuring module that configures the first CORESET based on the resource configuration requirement.

24. An apparatus for resource configuration, comprising:
a determining module, configured to determine a first control resource set (CORESET) configured for a terminal by a network device,
wherein the first CORESET is determined based on a resource configuration requirement, and the resource configuration requirement is used to determine a requirement that needs to be satisfied by a frequency domain resource comprised in the first CORESET.

25. A device for resource configuration, comprising:
a processor; and
a memory for storing instructions executable by the processor,
wherein the processor is configured to implement the method for resource configuration of any one of claims 1 to 13.

26. A device for resource configuration, comprising:
a processor; and
a memory for storing instructions executable by the processor,
wherein the processor is configured to implement the method for resource configuration of any one of claims 14 to 22.

27. A storage medium for storing instructions, wherein when the instructions in the storage medium are executed by a processor of a network device, the network device is caused to implement the method for resource configuration of any one of claims 1 to 13.

28. A storage medium for storing instructions, wherein when the instructions in the storage medium are executed by a processor of a terminal, the terminal is caused to implement the method for resource configuration of any one of claims 14 to 22.
